# EUROPÄISCHE PATENTSCHRIFT

(11) **EP 2 664 042 B1**
(45) Veröffentlichungstag und Bekanntmachung des Hinweises auf die Patenterteilung: **12.11.2014**
(21) Anmeldenummer: 11852210.1
(22) Anmeldetag: 31.08.2011
(51) Int. Cl.: H02G 3/06

(54) **VORRICHTUNG ZUR FIXIERUNG EINES KABELS AN EINEN KABELABGANGSSTUTZEN**
DEVICE FOR FIXING A CABLE TO A CABLE OUTLET CONNECTOR
DISPOSITIF POUR FIXER UN CÂBLE À UN RACCORD DE SORTIE DE CÂBLE

(30) Priorität: 13.01.2011 DE 102011000124
(43) Veröffentlichungstag der Anmeldung: 20.11.2013
(73) Patentinhaber: Harting Electric GmbH & Co. KG, 32339 Espelkamp (DE)
(72) Erfinder: RIEPE, Dieter, 32312 Lübbecke (DE); SCHLEGEL, Bernard, 32369 Rahden (DE)
(86) Internationale Anmeldenummer: PCT/DE2011/075204
(87) Internationale Veröffentlichungsnummer: WO 2012/095089

(56) Entgegenhaltungen:
- US-A1- 2006 141 827
- US-A1- 2008 105 450
- US-B1- 6 849 803

## Beschreibung

Die Erfindung betrifft eine Vorrichtung zur Fixierung eines Kabels an einen Kabelabgangsstutzen, bestehend aus einer Spannhülse, einer Verriegelungsmanschette und einem Verriegelungsschieber.

Derartige Vorrichtungen zur Fixierung eines Kabels an einen Kabelabgangsstutzen werden benötigt, um Kabel an Kabelabgängen von Steckverbindergehäusen, Schaltschränken oder Ähnlichen verdreh- und zugsicher zu halten.

Die DE 10 2007 012 190 A1 zeigt eine Vorrichtung zur Durchführung von Kabeln durch eine Wandöffnung. Die Vorrichtung wir verliersicher an der Wand fixiert. Mithilfe einer Klemmvorrichtung werden die Kabel in der Vorrichtung festgeklemmt.

Auch die DE 34 40 103 C2 offenbart eine Wanddurchführung für Leitungen, beispielsweise für elektrische Kabel. Es sind Kupplungshalter vorgesehen, die über die miteinander zu kuppelnden Kupplungsenden geschoben werden können.

Die DE 195 26 927 A1 zeigt eine Dichtungstülle zur Durchführung von Leitungen durch eine Wandöffnung. Die Dichtungstülle wird durch ein aufschiebbares Sicherungsteil an der Wandfläche gesichert.

Die DE 10 2004 020 819 B4 offenbart ein Verbindungselement zwischen zwei endtsücken einer schlauch- oder rohrförmigen Leitung.

Die EP 0 627 588 B1 zeigt eine Kabelverschraubung zur Sicherung eines Kabels an einen Kabelabgangsstutzen. Der Stutzen ist mit einzelnen, flexiblen Klemmzungen versehen, welche, beim Aufschrauben einer Überwurfmutter, gegen eine über den Kabelmantel geschobene Dichtung geführt werden und damit die Dichtung und gleichzeitig das Kabel einklemmen.

Beim Zusammenpressen der Klemmzungen kann es vorkommen, dass der über die Dichtung auf das Kabel ausgeübte Pressdruck nicht die erforderliche Höhe zur Dreh- und Zugsicherung des Kabels erreicht.

Die DE 3 1 28 541 C1 zeigt eine Kabelverschraubung mit einer Sicherung gegen unbeabsichtigtes Lösen. Allerdings erfordert die Kabelverschraubung hier spezielles Werkzeug.

Die US 2006 141 827 A1 zeigt Kabelfixierung für einen Kabelabgangsstutzen. Die Verriegelung wird über eine Verriegelungsmanschette in Zusammenspiel mit einem Verriegelungsschieber erreicht. Bei dieser Lösung benötigt das Kabel aber eine spezielle spiralförmige Ummantelung. Diese Lösung ist insgesamt sehr aufwendig zu realisieren.

Die Aufgabe der Erfindung besteht darin, eine Kabelfixierung vorzuschlagen, die die oben geschilderten Mängel beseitigt und einfach montierbar ist.

Die Aufgabe wird durch die kennzeichnenden Merkmale des Anspruchs 1 gelöst.

Vorteilhafte Ausgestaltungen der Erfindung sind in den Unteransprüchen angegeben.

Ein Kabelzugentlastungs- und Dichtungssystem ist in der Regel in einem Kabelfixierungselement, beispielsweise einer Kabelverschraubung, integriert. Die erfindungsgemäße Kabelfixierung besteht im wesentlichen aus den Bauteilen Spannhülse, Verriegelungsmanschette und Verriegelungsschieber, die in Wirkzusammenhang mit dem Kabelzugentlastungs- und Dichtungssystem ein Kabel auf einem Kabelabgangsstutzen eines Steckverbindergehäuses fixieren. Das Kabel kann beispielsweise mehradrig sein.

Die Verriegelungsmanschette ist im wesentlichen als flaches Bauteil mit zwei rechtwinklig davon abstehenden Seitenflächen ausgebildet. Mittig ist in der Verriegelungsmanschette eine kreisrunde Öffnung vorgesehen, die den unteren Teil der Spannhülse aufnehmen kann. Die beiden abstehenden Seitenflächen umschließen den oberen Teil des Kabelabgangsstutzens.

Am unteren Teil der Spannhülse ist ein radial nach außen gerichteter Rand angeformt. Der Radius des umlaufenden Randes ist größer als der Radius der kreisrunden Öffnung der Verriegelungsmanschette. Die Spannhülse wird zwischen den abstehenden Seitenflächen der Verriegelungsmanschette durch deren kreisrunde Öffnung geführt. Befindet sich die Verriegelungsmanschette nun auf dem Kabelabgangsstutzen, verhindert der umlaufende Rand der Spannhülse, dass die Spannhülse vom Kabelabgangsstutzen entfernt werden kann. Die Spannhülse wird durch die Verriegelungsmanschette auf dem Kabelabgangsstutzen gehalten.

Der Verriegelungsschieber ist im wesentlichen als U-förmiges Bauteil ausgebildet. Die beiden Seitenarme des Verriegelungsschiebers können in dafür vorgesehene Führungen der Verriegelungsmanschette eingeführt werden. Die Führungen sind innerhalb der abstehenden Seitenflächen der Verriegelungsmanschette eingeformt. Die Seitenarme des Verriegelungsschiebers enthalten Rastöffnungen, die über dafür vorgesehene Rastnasen des Kabelabgangsstutzens greifen.

Ist der Verriegelungsschieber gänzlich in radialer Richtung des Kabelabgangsstutzens in die Verriegelungsmanschette eingeführt, sind die Bauteile Spannhülse, Verriegelungsmanschette und Kabelabgangsstutzen unverlierbar miteinander verbunden.

Vorteilhafterweise sind an den Seitenflächen der Verriegelungsmanschette innenseitig Begrenzungsnasen vorgesehen, die die Eindringtiefe des Verriegelungsschiebers in die Verriegelungsmanschette begrenzen. Der Verriegelungsschieber umfasst an den seitlichen Armen jeweils so genannte Begrenzungsstifte, die gegen die Begrenzungsnasen geführt werden, wenn die maximale Einschiebtiefe erreicht ist.

Vorteilhafterweise umfasst der Verriegelungsschieber ein so genanntes Betätigungsteil. Das Betätigungsteil steht entgegengesetzt zu den seitlichen Armen vom Verriegelungsschieber ab und ist mit einer Grifffläche zur händischen Benutzung ausgestattet. Das Betätigungsteil dient dazu, den Verriegelungsschieber im eingeschobenen Zustand (im verriegeltem Zustand) aus der Verriegelungsmanschette herausziehen zu können. So können die Bauteile Spannhülse, Verriegelungsmanschette und Kabelabgangsstutzen wieder voneinander getrennt werden.

Ein Ausführungsbeispiel der Erfindung ist in den Zeichnungen dargestellt und wird im Folgenden näher erläutert. Es zeigen:
- Fig. 1: eine perspektivische Darstellung einer Spannhülse,
- Fig. 2: eine perspektivische Darstellung einer Verriegelungsmanschette,
- Fig. 3: eine perspektivische Darstellung eines Verriegelungsschiebers,
- Fig. 4: eine perspektivische Darstellung eines Kabelabgangsstutzens,
- Fig. 5: eine perspektivische Darstellung des Kabelabgangsstutzens mit aufgeschobenen Verriegelungsschieber,
- Fig. 6: eine perspektivische Ansicht der Verriegelungsmanschette mit eingeschobenen Verriegelungsschieber,
- Fig. 7: eine perspektivische Darstellung der gesamten Vorrichtung zur Fixierung eines Kabels an einen Kabelabgangsstutzen
- Fig. 8: eine perspektivische Darstellung eines Kabelzugentlastungselements mit verbundenem Dichtungselement,
- Fig. 9a: eine perspektivische Darstellung des Dichtungselements und
- Fig. 9b: eine weitere perspektivische Darstellung des Dichtungselements

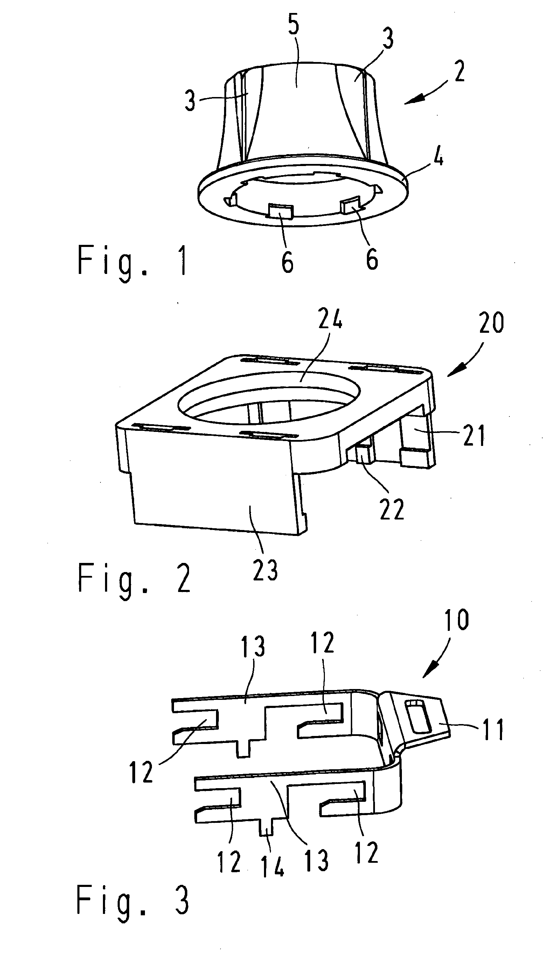

Die Figur 1 zeigt die perspektivische Ansicht einer Spannhülse 2. Die Spannhülse 2 ist im wesentlichen zylinderförmig ausgebildet, wobei sie sich in Kabelabgangsrichtung ein wenig trichterförmig verjüngt.

Die Figur 2 zeigt die perspektivische Ansicht einer Verriegelungsmanschette 20. Die Verriegelungsmanschette 20 besteht im wesentlichen aus einem flachen, nahezu rechteckigem Bereich von dem einseitig zwei Seitenflächen 23 abgehen, die einander gegenüberliegen. Die Seiten der Seitenflächen 23, die zueinander gerichtet sind, umfassen Führungen 21, die für die Aufnahme der Seitenarme 13 des Betätigungsschiebers 10 (Figur 3) vorgesehen sind.

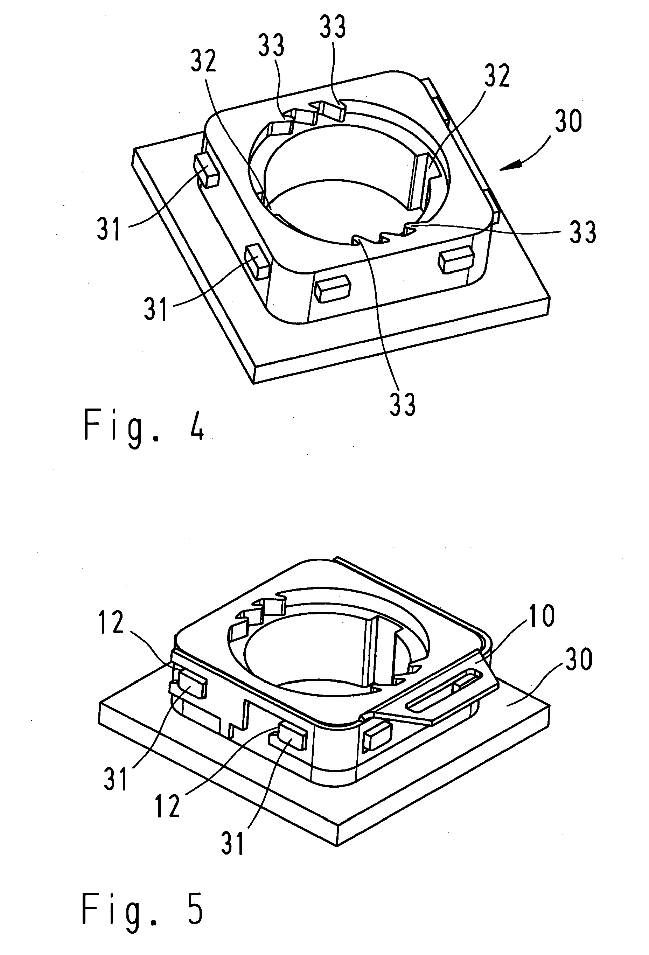

In den Seitenarmen 13 des Betätigungsschiebers 10 sind Rastöffnungen 12 eingeformt. Diese Rastöffnungen 12 sind dafür vorgesehen, über Rastnasen 31 des Kabelabgangsstutzens 30 (Figur 4) zu greifen.

Die Figur 5 zeigt eine perspektivische Darstellung des Kabelabgangsstutzens 30 mit aufgeschobenen Verriegelungsschieber 10. Es ist gut zu erkennen wie die Rastnasen 31 in den Rastöffnungen 12 liegen.

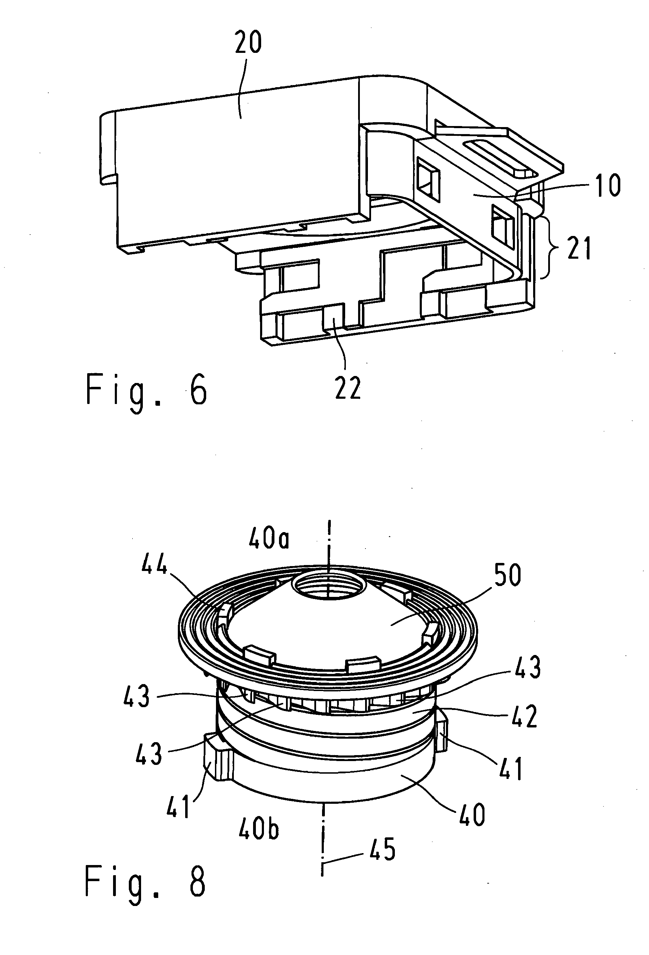

Die Figur 6 zeigt eine perspektivische Ansicht der Verriegelungsmanschette 20 mit eingeschobenen Verriegelungsschieber 10. Die Seitenarme 13 des Verriegelungsschiebers 10 liegen in den dafür vorgesehenen Führungen 21 der Verriegelungsmanschette 20. Damit der Verriegelungsschieber 10 nur bis zu einer bestimmten Tiefe in die Verriegelungsmanschette eingeschoben werden kann, sind an den Seitenarmen 13 des Verriegelungsschiebers 10 Begrenzungsstifte 14 angeformt, die beim Einschieben gegen Begrenzungsnasen 22 der Verriegelungsmanschette 20 geführt werden.

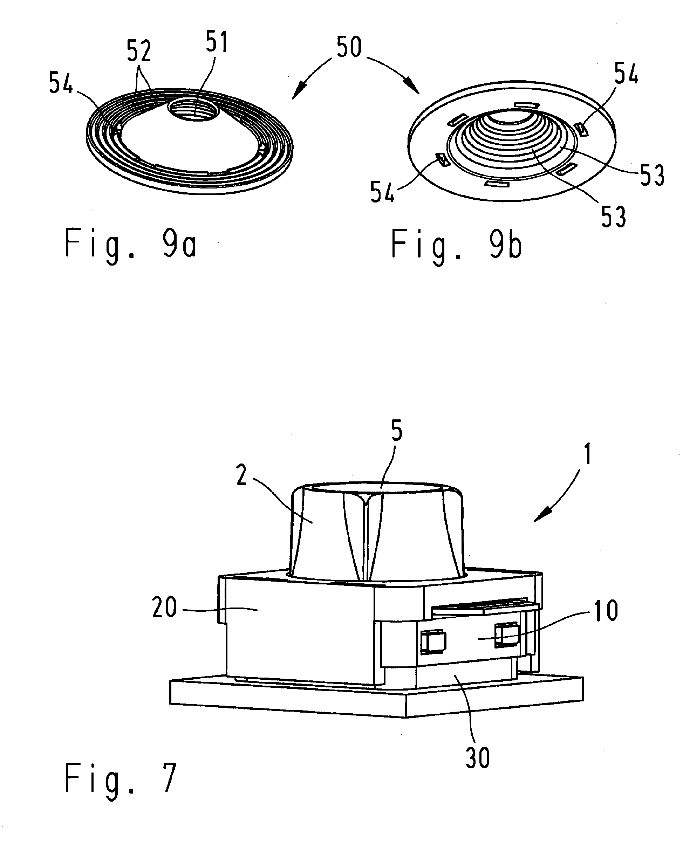

In der Figur 7 ist zu erkennen wie die Vorrichtung 1 zur Fixierung eines Kabels an den Kabelabgangsstutzen im zusammengebauten Zustand aussieht. Die Spannhülse 2 wird durch die Öffnung 24 der Verriegelungsmanschette 20 geführt. Der radial nach außen weisende, umlaufende Rand 4 der Spannhülse 2 verhindert, dass die Spannhülse gänzlich durch die Öffnung 24 geschoben werden kann. Der Radius des umlaufenden Randes 4 ist größer als der Radius der Öffnung 24. Ein anzuschließendes Kabel (aus darstellerischen Gründen in keiner Figur gezeigt) würde aus der Öffnung 5 der Spannhülse 2 ragen. Über die Verriegelungsmanschette 20 wird die Spannhülse 2 auf dem Kabelabgangsstutzen 30 gehalten.

Wie bereits oben erwähnt, greifen die abstehenden Arme 13 des Verriegelungsschiebers 10 in Führungen 21 der Verriegelungsmanschette 20 ein. Gleichzeitig greifen die Rastöffnungen 12 des Verriegelungsschiebers 10 über Rastnasen 31 des Kabelabgangsstutzens 30. Bei eingeschobenen Verriegelungsschieber 10 sind die Bauteile Spannhülse 2, Verriegelungsmanschette 20, Verriegelungsschieber 10 und Kabelabgangsstutzen 30 unverlierbar miteinander verbunden.

Im Folgenden wird die Funktion der Kabelzugentlastung beschrieben.

In Figur 8 ist ein Kabelzugentlastungselement 40 zusammen mit einem Dichtungselement 50 gezeigt. Das Kabelzugentlastungselement 40 ist an seiner ersten Seite 40a mit dem Dichtungselement 50 verbunden. Das Dichtungselement 50 (Figuren 9a und 9b) weist Öffnungen 54 auf, die über axial abstehende Mitnehmerkonturen 44 des Kabelzugentlastungselements 40 geführt werden. Die gegenüberliegende Seite 40b des Kabelzugentlastungselements 40 umfasst radial abstehende Konturen 41.

Die Konturen 41 des Kabelzugentlastungselements 40 werden in dafür vorgesehene Ausnehmungen 32 des Kabelabgangsstutzens 30 geführt, wodurch das Kabelzugentlastungselement 40 an diesem Ende 40b um seine axiale Achse 45 drehfest fixiert ist. Am ersten Ende 40a des Kabelzugentlastungselement 40 sind radial abstehende Rasthaken 43 angeordnet. Zwischen den Enden 40a und 40b ist das Kabelzugentlastungselement 40 wendelförmig (helixförmig) ausgebildet.

Die Rasthaken 43 des Kabelzugentlastungselements 40 verrasten mit Spannkonturen 33, die innerhalb des Kabelabgangsstutzens 30 angeordnet sind. Die Rasthaken 43 bestehen aus flexiblen Material (beispielsweise Kunststoff). Die Spannkonturen 33 und die Rasthaken 43 sind so ausgebildet, dass eine Drehung des Endes 40a des Kabelzugentlastungselements 40 in eine Richtung um die axiale Achse 45 möglich ist. Die Rasthaken 43 gleiten dabei über die Spannkonturen 33 ab.

Die Spannhülse 2 weist innenseitig Ausnehmungen 6 auf, die auf die Mitnehmerkonturen 44 des Kabelzugentlastungselements 40 greifen. Über seitliche Flügel 3 der Spannhülse 2 lässt sich die Spannhülse 2 und damit auch das Ende 40a des Kabelzugentlastungselements 40 drehen. Ein vom Kabelzugentlastungselement 40 und von der Spannhülse 2 umschlossenes Kabel wird durch die sich verengende wendelförmige Struktur 42 mittig fixiert. Eine Drehung der Spannhülse 2 (und des Endes 40a des Kabelzugentlastungselements 40) in die andere Drehrichtung wird durch die Spannkonturen 33 verhindert. Die Spannhülse 2 fungiert in diesem Fall wie eine Ratsche. Durch Anheben der Spannhülse 2, bei ausgezogenem Verriegelungsschieber 10, kann die wendelförmige Struktur 42 des Kabelzugentlastungselements 40 vom Kabelmantel gelöst werden.

Das Dichtungselement weist eine Kabelöffnung 51 auf, durch die das Kabel geführt wird. Der Durchmesser der Kabelöffnung 51 ist dem Kabeldurchmesser entsprechend angepasst. Einseitig weist das Dichtungselement 50 Presslamellen 52 auf, die im Randbereich angeordnet sind. Die Presslamellen dienen der besseren Dichtigkeit des Steckverbindergehäuses. Die andere Seite des Dichtungselements 50 weist Dichtlamellen 53 auf die entlang der Kabelöffnung 51 verlaufen. Diese Dichtlamellen 53 dienen der besseren Dichtigkeit zum angeschlossenem Kabel.

**Bezugszeichenliste**

| Vorrichtung zur Fixierung eines Kabels an einen Kabelabgangsstutzen | | | |
|---|---|---|---|
| **1** | **Vorrichtung zur Fixierung des Kabels** | | |
| **2** | **Spannhülse** | **40** | **Kabelzugentlastungselement** |
| 3 | Flügel | 40a | Erstes Ende |
| 4 | umlaufender rand | 40b | Zweites Ende |
| 5 | Kabelaustrittsöffnung | 41 | Kontur |
| 6 | Ausnehmung | 42 | Helixförmige / wendelförmige Struktur |
| | | 43 | Rasthaken |
| **10** | **Verriegelungsschieber** | 44 | Mitnehmerhaken |
| 11 | Betätigungsteil | 45 | axiale Achse |
| 12 | Rastöffnungen | | |
| 13 | Seitenarm | **50** | **Dichtungselement** |
| 14 | Begrenzungsstift | 51 | Öffnung |
| 15 | | 52 | Presslamellen |
| | | 53 | Dichtlamellen |
| **20** | **Verriegelungsmanschette** | | |
| 21 | Führung | | |
| 22 | Begrenzungsnase | | |
| | | | |
| **30** | **Kabelabgangsstutzen** | | |
| 31 | Rastnasen | | |
| 32 | Ausnehmung | | |
| 33 | Spannkontur | | |
| 34 | | | |

## Patentansprüche

1. Vorrichtung zur Fixierung eines Kabels an einen Kabelabgangsstutzen (30), bestehend aus einer Spannhülse (2), einer Verriegelungsmanschette (20) und einem Verriegelungsschieber (10) **dadurch gekennzeichnet**,
➢ dass die Verriegelungsmanschette (20) zumindest einen Teil des Kabelabgangsstutzens (30) und gleichzeitig zumindest einen Teil der Spannhülse (2) umschließt, wodurch die Spannhülse (2) auf dem Kabelabgangsstutzen (30) gehalten wird, und
➢ dass der Verriegelungsschieber (10) in eine dafür vorgesehene Führung (21) der Verriegelungsmanschette (20) einführbar ist, und
➢ dass der Verriegelungsschieber (10) Rastöffnungen (12) umfasst, die über dafür vorgesehene Rastnasen (31) des Kabelabgangsstutzens (30) greifen,
➢ so dass die Spannhülse (2), die Verriegelungsmanschette (20) und der Kabelabgangsstutzen (30) unverlierbar miteinander verbunden sind.

2. Vorrichtung zur Fixierung eines Kabels an einen Kabelabgangsstutzen (30) nach Anspruch 1
**dadurch gekennzeichnet, dass**
der Verriegelungsschieber (10) in radialer Richtung des Kabelabgangsstutzens (30) auf die Verriegelungsmanschette (20) aufschiebbar ist.

3. Vorrichtung zur Fixierung eines Kabels an einen Kabelabgangsstutzen (30) nach einem der vorstehenden Ansprüche
**dadurch gekennzeichnet, dass**
der Verriegelungsschieber (10) im wesentlichen U-förmig geformt ist und einen Betätigungsteil (11) umfasst, der (11) auch im verriegeltem Zustand von außen für einen Bediener zugänglich ist.

4. Vorrichtung zur Fixierung eines Kabels an einen Kabelabgangsstutzen (30) nach einem der vorstehenden Ansprüche
**dadurch gekennzeichnet, dass**
die Verriegelungsmanschette (20) innenseitig zumindest eine Begrenzungsnase (21) umfasst, die die Eindringtiefe des Verriegelungsschiebers (10) in die Verriegelungsmanschette (20) begrenzt.

5. Vorrichtung zur Fixierung eines Kabels an einen Kabelabgangsstutzen (30) nach einem der vorstehenden Ansprüche
**dadurch gekennzeichnet, dass**
ein Kabelzugentlastungselement (40) vorgesehen ist,
welches (30) wendelförmig ausgebildet ist,
welches (30) im Kabelabgangsstutzen (30) um seine axiale Achse (45) drehfest fixierbar ist und
welches (30) in der Spannhülse (2) in nur eine Drehrichtung um die axiale Achse (45) bewegbar fixierbar ist.

6. Vorrichtung zur Fixierung eines Kabels an einen Kabelabgangsstutzen (30) nach vorstehendem Anspruch
**dadurch gekennzeichnet, dass**
das Kabelzugentlastungselement (40) mit einem Dichtungselement (50) verbunden ist.

7. Vorrichtung zur Fixierung eines Kabels an einen Kabelabgangsstutzen (30) nach vorstehendem Anspruch
**dadurch gekennzeichnet, dass**
das Dichtungselement (50) einseitig im Randbereich Presslamellen (52) umfasst, die zur Verbesserung der Dichtfunktion eines Steckverbindergehäuses geeignet sind.

8. Vorrichtung zur Fixierung eines Kabels an einen Kabelabgangsstutzen (30) nach einem der beiden vorstehenden Ansprüche
**dadurch gekennzeichnet, dass**
das Dichtungselement (50) einseitig im mittleren Bereich Dichtlamellen (53) umfasst, die zur Verbesserung der Dichtfunktion zu einem angeschlossenem Kabel geeignet sind.

## Claims

1. A device for fixing a cable to a cable outlet connector (30), consisting of a clamping sleeve (2), a locking collar (20) and a locking slider (10),
**characterized in that**
➢ the locking collar (20) encloses at least part of the cable outlet connector (30) and, at the same time, at least part of the clamping sleeve (2), whereby the clamping sleeve (2) is held on the cable outlet connector (30), and
➢ **in that** the locking slider (10) is adapted to be inserted into a dedicated guide (21) of the locking collar (20), and
➢ **in that** the locking slider (10) comprises detent openings (12) which engage over dedicated detent noses (31) of the cable outlet connector (30),
➢ so that the clamping sleeve (2), the locking collar (20) and the cable outlet connector (30) are captively connected to each other.

2. The device for fixing a cable to a cable outlet connector (30) according to claim 1,
**characterized in that**
the locking slider (10) is adapted to be pushed onto the locking collar (20) in the radial direction of the cable outlet connector (30).

3. The device for fixing a cable to a cable outlet connector (30) according to either of the preceding claims,
**characterized in that**
the locking slider (10) is shaped to be substantially U-shaped and comprises an actuation part (11) which (11) is accessible to an operator from the exterior even in the locked condition.

4. The device for fixing a cable to a cable outlet connector (30) according to any of the preceding claims,
**characterized in that**
on the inside, the locking collar (20) comprises at least one limiting nose (21) which limits the depth of penetration of the locking slider (10) into the locking collar (20).

5. The device for fixing a cable to a cable outlet connector (30) according to any of the preceding claims,
**characterized in that**
a cable strain relief element (40) is provided
which (30) is of a helical configuration,
which (30) is adapted to be fixed in the cable outlet connector (30) so as to be non-rotatable about its axial axis (45), and
which (30) is adapted to be fixed in the clamping sleeve (2) so as to be movable about the axial axis (45) in only one direction of rotation.

6. The device for fixing a cable to a cable outlet connector (30) according to the preceding claim,
**characterized in that**
the cable strain relief element (40) is connected to a sealing element (50).

7. The device for fixing a cable to a cable outlet connector (30) according to the preceding claim,
**characterized in that**
on one side, the sealing element (50) comprises pressing lamellae (52) in the rim region which are suitable for improving the sealing function of a plug connector housing.

8. The device for fixing a cable to a cable outlet connector (30) according to either of the two preceding claims,
**characterized in that**
on one side, the sealing element (50) comprises sealing lamellae (53) in the central region which are suitable for improving the sealing function in relation to a connected cable.

## Revendications

1. Dispositif de fixation d'un câble sur une tubulure de sortie de câble (30), composé d'une douille de serrage (2), d'une manchette de verrouillage (20) et d'un coulisseau de verrouillage (10),
caractérisé
➢ en ce que la manchette de verrouillage (20) renferme au moins une partie de la tubulure de sortie de câble (30) et en même temps au moins une partie de la douille de serrage (2), grâce à quoi la douille de serrage (2) est retenue sur la tubulure de sortie de câble (30), et
➢ en ce que le coulisseau de verrouillage (10) est apte à être inséré dans un guidage (21) de la manchette de verrouillage (20) prévu à cet effet, et
➢ en ce que le coulisseau de verrouillage (10) comprend des orifices d'enclenchement (12) qui s'engagent sur des nez d'enclenchement (31) de la tubulure de sortie de câble (30) prévus à cet effet,
➢ de telle sorte que la douille de serrage (2), la manchette de verrouillage (20) et la tubulure de sortie de câble (30) sont reliées les unes aux autres de manière imperdable.

2. Dispositif de fixation d'un câble sur une tubulure de sortie de câble (30) selon la revendication 1,
**caractérisé en ce que**
le coulisseau de verrouillage (10) peut être emboîté sur la manchette de verrouillage (20) dans le sens radial de la tubulure de sortie de câble (30).

3. Dispositif de fixation d'un câble sur une tubulure de sortie de câble (30) selon l'une des revendications précédentes,
**caractérisé en ce que**
le coulisseau de verrouillage (10) est réalisé sensiblement en forme de U et comprend une pièce d'actionnement (11) laquelle (11) est également accessible à un opérateur depuis l'extérieur à l'état verrouillé.

4. Dispositif de fixation d'un câble sur une tubulure de sortie de câble (30) selon l'une des revendications précédentes,
**caractérisé en ce que**
la manchette de verrouillage (20) présente du côté intérieur au moins un nez de limitation (21) qui limite le profondeur de pénétration du coulisseau de verrouillage (10) dans la manchette de verrouillage (20).

5. Dispositif de fixation d'un câble sur une tubulure de sortie de câble (30) selon l'une des revendications précédentes,
**caractérisé en ce que**
il est prévu un élément de décharge de traction de câble (40) lequel (30) est réalisé de manière hélicoïdale,
lequel (30) peut être fixé solidaire en rotation autour de son axe axial (45) dans la tubulure de sortie de câble (30), et
lequel (30) peut être fixé dans la douille de serrage (2) de manière à être déplaçable dans un seul sens de rotation autour de l'axe axial (45).

6. Dispositif de fixation d'un câble sur une tubulure de sortie de câble (30) selon la revendication précédente,
**caractérisé en ce que**
l'élément de décharge de traction de câble (40) est relié à un élément d'étanchéité (50).

7. Dispositif de fixation d'un câble sur une tubulure de sortie de câble (30) selon la revendication précédente,
**caractérisé en ce que**
l'élément d'étanchéité (50) comprend d'un côté dans la zone de bord des lamelles de pression (52) aptes à améliorer la fonction d'étanchement d'un boîtier de connecteur enfichable.

8. Dispositif de fixation d'un câble sur une tubulure de sortie de câble (30) selon l'une des deux revendications précédentes,
**caractérisé en ce que**
l'élément d'étanchéité (50) comprend d'un côté dans la zone médiane des lamelles d'étanchéité (53) aptes à améliorer la fonction d'étanchement par rapport à un câble raccordé.
